# EUROPÄISCHE PATENTANMELDUNG

(11) **EP 4 327 906 A1**
(43) Veröffentlichungstag der Anmeldung: **28.02.2024**
(21) Anmeldenummer: 22192275.0
(22) Anmeldetag: 26.08.2022
(51) Int. Cl.: B01D 5/00

(54) **VORRICHTUNG MIT INTEGRIERTEM KONDENSATOR UND ABSCHEIDER**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: STROZYK, Michael, 60439 Frankfurt am Main (DE); OELMANN, Tobias, 60439 Frankfurt am Main (DE)
(74) Vertreter: Stang, Stefan

(57) **Zusammenfassung**

Die Erfindung betrifft eine Vorrichtung zum Abtrennen eines kondensierbaren Reaktionsprodukts aus einem Prozessgasgemisch. Die Vorrichtung weist einen Druckmantel mit einem Innenraum auf, wobei in dem Druckmantel zwei Prozesseinheiten übereinander angeordnet sind. Die obere erste Prozesseinheit ist zum Kondensieren des flüssigen Reaktionsproduktes aus dem Prozessgasgemisch konfiguriert und dabei als Plattenwärmeübertrager ausgestaltet. Der Plattenwärmeübertrager umfasst vertikal angeordnete und von einem Kühlmedium durchströmbare Platten. Die Platten weisen Platteninnenräume auf, welche vom Kühlmedium durchströmbar sind. Benachbarte und voneinander beabstandete Platten definieren Plattenzwischenräume, welche vom Prozessgasgemisch durchströmbar ist. Das Kühlmedium und das Prozessgasgemisch werden vorzugsweise im Gegenstrom geführt. Die untere zweite Prozesseinheit ist zum Abscheiden des in der ersten Prozesseinheit kondensierten Reaktionsproduktes konfiguriert und dabei als Gas-Flüssigkeits-Abscheider ausgestaltet.

## Beschreibung

Die Erfindung betrifft eine Vorrichtung zum Abtrennen eines kondensierbaren Reaktionsprodukts aus einem Prozessgasgemisch, insbesondere zum Abtrennen von Rohmethanol aus einem Prozessgasgemisch.

### Stand der Technik

Bei nicht integrierten Lösungen zur Herstellung von kondensierbaren Reaktionsprodukten, beispielsweise Rohmethanol, finden die einzelnen Prozessschritte in separaten Einzelpositionen oder Einzelapparaten statt. Für das Beispiel der Methanolsynthese bestehen diese Prozessschritte zumindest aus der Reaktion von Synthesegas zu Methanol, der Kühlung des Reaktionsgemischs zur Kondensation von Rohmethanol, und der Trennung (Abscheidung) des kondensierten Rohmethanols vom nicht reagierten Synthesegas (Restgas) und inerten Bestandteilen des Gasgemischs.

Bei der Verwendung von Einzelapparaten werden Prozessmedien der Prozesseinheit durch Stutzen in einen Druckapparat und von dort aus in die jeweiligen innenliegenden Apparatebauteile eingeleitet, dort verteilt beziehungsweise gesammelt und anschließend ausgeleitet. Dies geschieht durch den jeweiligen Apparat betreffende dedizierte Apparate-Öffnungen und -Einbauten zum einen, und zum anderen durch verbindende Elemente wie Rohrleitungen und Armaturen, und je nach der relativen Lage der Prozesseinheiten über weitere Fördereinrichtungen wie Pumpen.

Um mehrere Prozesseinheiten zu kombinieren, sind somit mehrere Druckapparate und externe Rohrleitungen erforderlich, welche separat gefertigt und auf Fundamenten oder in einem Stahlbau innerhalb einer Anlage installiert werden müssen. Dies führt zu hohen wirtschaftlichen Aufwendungen bezüglich der erforderlichen Investitionen (CAPEX) und auch der anfallenden Betriebskosten (OPEX). Dies ist insbesondere begründet durch die Vielzahl der erforderlichen Druckmäntel und Stutzen, sowie Rohrleitungen und Fördereinrichtungen. Diese Faktoren führen zu hohen Druckverlusten und Wärmeverlusten über das damit einhergehende große Gesamtvolumen und die damit einhergehende große Gesamtoberfläche, sowie zu einem höheren Energieeinsatz für die erforderlichen Fördereinrichtungen.

### Beschreibung der Erfindung

Eine Aufgabe der vorliegenden Erfindung besteht darin, die vorgenannten Nachteile des Standes der Technik zumindest teilweise zu überwinden.

Eine weitere Aufgabe der vorliegenden Erfindung besteht darin eine Vorrichtung bereitzustellen, welche es ermöglicht die Zahl verbindender Rohrleitungen, einzelner Druckmäntel und Apparateböden zu reduzieren.

Eine weitere Aufgabe der vorliegenden Erfindung besteht darin eine Vorrichtung bereitzustellen, welche zumindest zwei Prozessfunktionen erfüllt und dabei ein möglichst geringes Gesamtvolumen und eine möglichst geringe Gesamtoberfläche aufweist.

Eine weitere Aufgabe der vorliegenden Erfindung besteht darin eine Vorrichtung bereitzustellen, welche in Bezug auf die Erfüllung von zumindest zwei Prozessfunktionen eine möglichst geringe Gesamtfertigungszeit erfordert.

Eine weitere Aufgabe der vorliegenden Erfindung besteht darin eine Vorrichtung bereitzustellen, welche möglichst keine oder wenige Fördereinrichtungen in Bezug auf die zu erfüllenden Prozessfunktionen erfordert.

Eine weitere Aufgabe der vorliegenden Erfindung besteht darin eine Vorrichtung bereitzustellen, welche so konstruiert ist, dass Materialspannungen in den metallbasierten Bauteilen minimiert werden.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Gemäß einem ersten Aspekt der Erfindung wird eine Vorrichtung zum Abtrennen eines kondensierbaren Reaktionsprodukts aus einem Prozessgasgemisch vorgeschlagen, aufweisend
- einen Druckmantel mit einem Innenraum, wobei in dem Innenraum zumindest zwei fluidisch miteinander verbundene Prozesseinheiten übereinander angeordnet sind;
- eine erste Prozesseinheit, wobei die erste Prozesseinheit zum Kondensieren des Reaktionsprodukts aus dem Prozessgasgemisch konfiguriert ist, und
   die erste Prozesseinheit als Plattenwärmeübertrager ausgestaltet ist, und die erste Prozesseinheit dabei eine Vielzahl von vertikal und parallel zueinander angeordneten Platten mit durchströmbaren Platteninnenräumen aufweist, und zwischen benachbarten Platten Plattenzwischenräume ausgebildet sind, wobei die Plattenzwischenräume mit dem Prozessgasgemisch von oben nach unten durchströmbar sind, und die Platteninnenräume von einem Kühlmedium durchströmbar sind, vorzugsweise von unten nach oben durchströmbar sind;
- eine unterhalb der ersten Prozesseinheit angeordnete zweite Prozesseinheit, wobei die zweite Prozesseinheit fluidisch mit den Plattenzwischenräumen der ersten Prozesseinheit verbunden ist, und wobei die zweite Prozesseinheit als Gas-Flüssigkeits-Abscheider ausgestaltet ist und zum Abscheiden des in der ersten Prozesseinheit erhältlichen kondensierten Reaktionsprodukts von einem Restgas konfiguriert ist.

Unter einer "Vielzahl" von Platten wird erfindungsgemäß eine Mehrzahl von Platten verstanden, vorzugsweise jedoch mehr als zwei Platten, insbesondere mindestens 5 Platten, oder mindestens 10 Platten, oder mindestens 25 Platten, oder mindestens 50 Platten.

Die zumindest zwei Prozesseinheiten im Innenraum des Druckmantels beinhalten die erste und die zweite Prozesseinheit.

Erfindungsgemäß werden zwei Prozesseinheiten in einen gemeinsamen Druckmantel integriert. Unter einem Druckmantel wird dabei eine umhüllende Struktur verstanden, welche höheren Innendrücken standhält, insbesondere Innendrücken deutlich oberhalb des Atmosphärendrucks, beispielsweise Drücken von mehr als 5 bar.

Die erste Prozesseinheit erfüllt die Funktion des Kondensierens eines kondensierbaren Reaktionsprodukts aus einem Prozessgasgemisch. Insbesondere erfüllt die erste Prozesseinheit somit die Funktion eines Kondensators. Zur Erfüllung dieser Funktion ist die erste Prozesseinheit als Plattenwärmeübertrager ausgestaltet.

Zwei benachbarte Platten sind so voneinander beabstandet, dass sich zwischen zwei benachbarten Platten ein Plattenzwischenraum ausbildet. Die Plattenzwischenräume sind mit dem Prozessgasgemisch von oben nach unten durchströmbar, und die Platteninnenräume sind von einem Kühlmedium durchströmbar, vorzugsweise von unten nach oben durchströmbar. Alternativ formuliert weist die Vorrichtung Mittel auf welche so konfiguriert sind, dass die Plattenzwischenräume mit dem Prozessgasgemisch von oben nach unten durchströmbar sind, und die Platteninnenräume von dem Kühlmedium durchströmbar sind, vorzugsweise von unten nach oben durchströmbar sind. Die Platteninnenräume der ersten Prozesseinheit sind dabei vorzugsweise in vertikaler Richtung durchströmbar, insbesondere in vertikaler Richtung von unten nach oben von dem Kühlmedium durchströmbar. Die Plattenzwischenräume der ersten Prozesseinheit sind dabei vorzugsweise in vertikaler Richtung durchströmbar, insbesondere in vertikaler Richtung von oben nach unten von dem Prozessgasgemisch durchströmbar.

Die zweite Prozesseinheit erfüllt die Funktion des Abscheidens des kondensierten oder kondensierbaren Reaktionsprodukts von einem Restgas. Die zweite Prozesseinheit erfüllt somit die Funktion eines Gas-Flüssigkeits-Abscheiders und ist als ein solcher ausgestaltet.

In der zweiten Prozesseinheit wird somit ein flüssiges Reaktionsprodukt von übrigen gasförmigen Bestandteilen abgetrennt. Gemäß einem Beispiel handelt es sich bei dem Prozessgasgemisch um ein gasförmiges Reaktionsprodukt aus einer vorgeschalteten Methanol-Synthese mit Synthesegas (Wasserstoff, Kohlenmonoxid, Kohlendioxid) als Eduktgasgemisch. Gemäß diesem Beispiel enthält das Prozessgasgemisch
- Rohmethanol als kondensierbares Reaktionsprodukt, aufweisend Methanol, Wasser und kondensierbare Nebenprodukte,
- ein Restgas, aufweisend nicht umgesetztes Synthesegas, inerte Bestandteile und nicht kondensierbare Nebenprodukte.

Die erste und zweite Prozesseinheit sind innerhalb des Druckmantels übereinander angeordnet, wobei die zweite Prozesseinheit unterhalb der ersten Prozesseinheit angeordnet ist. Beide Prozesseinheiten sind fluidisch miteinander verbunden. Insbesondere sind die erste und zweite Prozesseinheit bezüglich des Prozessgasgemischs und daraus kondensierbarer Bestandteile fluidisch miteinander verbunden.

Vorzugsweise sind die erste und zweite Prozesseinheit fluchtend hintereinander, das heißt entlang einer bezüglich der ersten und zweiten Prozesseinheit gemeinsamen Geraden oder Achse, angeordnet. Vorzugsweise ist die zweite Prozesseinheit also gegenüber der ersten Prozesseinheit nicht versetzt angeordnet und umgekehrt.

In der ersten Prozesseinheit wird beispielsweise Rohmethanol aus einem heißen Prozessgasgemisch durch Kühlung mit dem vorzugsweise im Gegenstrom zum Prozessgasgemisch geführten Kühlmedium kondensiert. In der zweiten Prozesseinheit wird beispielsweise das Rohmethanol aus dem so erhaltenen Gemisch abgeschieden. Die erste Prozesseinheit, welche im Betrieb insbesondere eine höhere Temperatur aufweist, ist innerhalb des Druckmantels räumlich von der zweiten und im Betrieb insbesondere kühleren Prozesseinheit getrennt, jedoch fluidisch mit dieser verbunden.

Im Betrieb bildet sich ein Temperaturgradient von einer oberen wärmeren Zone zu einer kühleren unteren Zone aus. Da das Prozessgasgemisch am Kopf der Vorrichtung zunächst ungekühlt oder durch vorgeschaltete Prozesseinheiten bestenfalls vorgekühlt in die erste Prozesseinheit eintritt, weist der Kopfbereich der Vorrichtung im Betrieb die höchsten Temperaturen auf. Das am Kopf der Vorrichtung eintretende heiße Prozessgasgemisch ist zunächst gasförmig, während es in Richtung des Sumpfes der Vorrichtung durch fortschreitende Kühlung immer stärker zum Phasenübergang neigt, das heißt ein immer größerer Anteil Reaktionsprodukt aus dem Prozessgasgemisch kondensiert.

Da die Dichte eines Mediums bei höheren Temperaturen relativ gesehen niedriger ist als die Dichte des gleichen Mediums bei niedrigeren Temperaturen, bildet sich im Betrieb auch ein Dichtegradient mit einer niedrigen Dichte in einer oberen Zone der Vorrichtung hin zu einer höheren Dichte in einer unteren Zone der Vorrichtung aus. Die beabsichtigte Strömungsrichtung des kondensierenden Prozessgasgemischs auf der Seite der Plattenzwischenräume von oben nach unten wird dadurch unterstützt, da sich schwerere Komponenten durch die Wirkung der Gravitation in einem unteren Bereich der Vorrichtung sammeln. Schließlich wird die beabsichtigte Strömungsrichtung des Prozessgasgemischs weiterhin auch durch die vertikale Anordnung der Platten der ersten Prozesseinheit begünstigt.

Durch die Kombination der vorgenannten Effekte kann bezüglich der erfindungsgemäßen Vorrichtung auf der Seite des Prozessgasgemischs vollständig auf eine Fördereinrichtung mit erzwungener Strömung, wie beispielsweise eine Pumpe, verzichtet werden. Dies gilt für die erste und die zweite Prozesseinheit. Die Abscheidung des flüssigen Reaktionsprodukts vom Restgas in der zweiten Prozesseinheit erfolgt nach dem Prinzip der Gravitation und erfordert daher keine Fördereinrichtung mit erzwungener Strömung.

Weiterhin erfordert die erfindungsgemäße Vorrichtung für zwei Prozessfunktionen (Kondensation und Abscheidung) nur einen einzigen Druckmantel.

Die Vorteile der erfindungsgemäßen Vorrichtung erstrecken sich weiterhin auf die Führung des Kühlmediums. Vorzugsweise wird das Kühlmedium auf der Seite der Platteninnenräume der durchströmbaren Platten von unten nach oben geführt, während das abzukühlende Prozessgasgemisch auf der Seite der Plattenzwischenräume von oben nach unten geführt wird. Das Kühlmedium tritt somit vorzugsweise in einem unteren Bereich der ersten Prozesseinheit in diese ein, und tritt vorzugsweise in einem oberen Bereich aus dieser aus. Dabei wärmt es sich in Strömungsrichtung von unten nach oben kontinuierlich durch die Abkühlung des Prozessgasgemisches auf und/oder geht kontinuierlich von einer flüssigen Phase in eine gasförmige Phase über. Der vorgenannte Temperaturgradient bildet sich für diesen Fall somit sowohl auf der Seite der Platteninnenräume als auch auf der Seite der Plattenzwischenräume der ersten Prozesseinheit aus.

Der sich durch die erfindungsgemäße Anordnung der ersten und zweiten Prozesseinheit und die erfindungsgemäße Strömungsführung im Betrieb ausbildende Temperaturgradient findet sich nicht nur in den strömenden Medien, sondern entsprechend auch in den metallischen Strukturen der Vorrichtung wieder. Da der Temperaturgradient kontinuierlich fallend von einem oberen Bereich zu einem unteren Bereich auch in den metallischen Strukturen der Vorrichtung verläuft und keine Temperaturspitzen aufweist, werden mögliche thermische Spannungen aufgrund lokal auftretender großer Temperaturunterschiede auf ein Minimum reduziert. Die erste und zweite Prozesseinheit sowie der Druckmantel sind insbesondere aus einem Metall oder einer Metall-Legierung gefertigt. Vorzugsweise sind zumindest die medienführenden Komponenten der ersten und zweiten Prozesseinheit und des Druckmantels aus einem Metall oder einer Metall-Legierung gefertigt.

Eine Ausführungsform der erfindungsgemäßen Vorrichtung ist dadurch gekennzeichnet, dass die Vorrichtung eine Stützstruktur aufweist, wobei die Stützstruktur als zumindest teilweise unterhalb einer Prozesseinheit angeordnete Abstützung oder als zumindest teilweise oberhalb einer Prozesseinheit angeordnete Aufhängung ausgestaltet ist und dabei eine mechanische Verbindung zwischen einer Prozesseinheit und dem Druckmantel ausbildet, oder die Stützstruktur als zumindest teilweise zwischen der ersten und zweiten Prozesseinheit angeordnetes Verbindungselement ausgestaltet ist und dabei eine mechanische Verbindung zwischen beiden Prozesseinheiten und dem Druckmantel ausbildet.

Eine "Stützstruktur" im Sinne der Erfindung kann alternativ auch als "Stützelement" bezeichnet werden.

Die Stützstruktur ist gemäß dieser Ausführungsform als Aufhängung, als Abstützung, oder als Verbindungselement ausgestaltet. Im Falle einer Aufhängung ist die Stützstruktur zumindest teilweise, also teilweise oder vollständig oberhalb der jeweiligen Prozesseinheit angeordnet. Im Falle einer Abstützung ist die Stützstruktur zumindest teilweise, also teilweise oder vollständig unterhalb der jeweiligen Prozesseinheit angeordnet.

Gemäß einem Beispiel dieser Ausführungsform ist die Stützstruktur als zumindest teilweise unterhalb einer Prozesseinheit angeordnete Abstützung ausgestaltet und bildet dabei eine mechanische Verbindung zwischen einer Prozesseinheit und dem Druckmantel aus. Die jeweilige Prozesseinheit, also die erste und/oder zweite Prozesseinheit, kann sich dann in vorteilhafter Weise frei in vertikaler Richtung nach oben innerhalb des Druckmantels ausdehnen.

Gemäß einem weiteren Beispiel dieser Ausführungsform ist die Stützstruktur als zumindest teilweise oberhalb einer Prozesseinheit angeordnete Aufhängung ausgestaltet und bildet dabei eine mechanische Verbindung zwischen einer Prozesseinheit und dem Druckmantel aus. Die jeweilige Prozesseinheit, also die erste und/oder zweite Prozesseinheit, kann sich dann in vorteilhafter Weise frei in vertikaler Richtung nach unten innerhalb des Druckmantels ausdehnen.

Gemäß einem weiteren Beispiel dieser Ausführungsform ist die Stützstruktur als zumindest teilweise zwischen der ersten und zweiten Prozesseinheit angeordnetes Verbindungselement ausgestaltet und bildet dabei eine mechanische Verbindung zwischen beiden Prozesseinheiten und dem Druckmantel aus. Die erste Prozesseinheit kann sich dann in vorteilhafter Weise frei in vertikaler Richtung nach oben innerhalb des Druckmantels ausdehnen und die zweite Prozesseinheit kann sich dann in vorteilhafter Weise frei in vertikaler Richtung nach unten innerhalb des Druckmantels ausdehnen.

Bei der mechanischen Verbindung zwischen der jeweiligen Prozesseinheit und dem Druckmantel kann es sich um eine kraftschlüssige Verbindung und/oder eine stoffschlüssige Verbindung handeln. Ein Beispiel für eine kraftschlüssige Verbindung ist eine Schraubverbindung. Ein Beispiel für eine stoffschlüssige Verbindung ist eine Schweißverbindung.

Eine weitere Ausführungsform der erfindungsgemäßen Vorrichtung ist dadurch gekennzeichnet, dass die Vorrichtung eine Stützstruktur aufweist, wobei die Stützstruktur als zumindest teilweise unterhalb der zweiten Prozesseinheit angeordnete Abstützung oder als zumindest teilweise oberhalb der ersten Prozesseinheit angeordnete Aufhängung ausgestaltet ist und dabei eine mechanische Verbindung zwischen der jeweiligen Prozesseinheit und dem Druckmantel ausbildet, und die Vorrichtung ein zumindest teilweise zwischen der ersten und zweiten Prozesseinheit angeordnetes Verbindungselement aufweist, wobei das Verbindungselement eine mechanische Verbindung zwischen der ersten Prozesseinheit und der zweiten Prozesseinheit ausbildet.

Gemäß dieser Ausführungsform beinhaltet die Vorrichtung eine Stützstruktur entweder zumindest teilweise oberhalb der ersten Prozesseinheit oder zumindest teilweise unterhalb der zweiten Prozesseinheit angeordnet. Das Verbindungelement bewirkt lediglich eine mechanische Verbindung zwischen der ersten und zweiten Prozesseinheit. Entsprechend kann sich die gesamte Konstruktion, abhängig von der Anordnung und Befestigung der Stützstruktur, bei thermisch bedingter Erwärmung im Betrieb frei nach unten oder frei nach oben ausdehnen.

Eine Ausführungsform der erfindungsgemäßen Vorrichtung ist dadurch gekennzeichnet, dass die Platten der ersten Prozesseinheit als Kissenplatten ausgestaltet sind.

Kissenplatten anstatt konventioneller Wärmeübertrager-Platten mit gerader Form bieten insbesondere bezüglich der erfindungsgemäßen Vorrichtung Vorteile in Bezug auf mechanische Stabilität und der Effizienz der Wärmeübertragung. Kissenplatten kombinieren insbesondere eine hohe Außendruckstabilität mit der Möglichkeit der flexiblen Anordnung. Kissenplatten-Wärmeübertrager sind beispielsweise näher in der DE 10 2016 005 999 A1 beschrieben.

Eine Ausführungsform der erfindungsgemäßen Vorrichtung ist dadurch gekennzeichnet, dass die erste Prozesseinheit ein erstes und ein zweites Kompartiment aufweist, wobei genannte Kompartimente so konfiguriert sind, dass Plattenzwischenräume des ersten Kompartiments von dem Prozessgasgemisch von oben nach unten durchströmbar sind, und Plattenzwischenräume des zweiten Kompartiments von einem aus der zweiten Prozesseinheit ausleitbaren Restgas von unten nach oben durchströmbar sind, wodurch in den Plattenzwischenräumen des zweiten Kompartiments weiteres Reaktionsprodukt aus dem Restgas kondensierbar ist.

Die Plattenzwischenräume des ersten Kompartiments sind von dem Prozessgasgemisch von oben nach unten durchströmbar, und die Plattenzwischenräume des zweiten Kompartiments sind von einem aus der zweiten Prozesseinheit ausleitbaren Restgases von unten nach oben durchströmbar. Alternativ formuliert weist die Vorrichtung gemäß dieser Ausführungsform Mittel auf die so konfiguriert sind, dass die Plattenzwischenräume des ersten Kompartiments von dem Prozessgasgemisch von oben nach unten durchströmbar sind, und die Plattenzwischenräume des zweiten Kompartiments von einem aus der zweiten Prozesseinheit ausleitbaren Restgases von unten nach oben durchströmbar sind.

Das zweite Kompartiment der ersten Prozesseinheit erfüllt die Funktion eines Nachkühlers. Dabei erfüllt das erste Kompartiment der ersten Prozesseinheit weiterhin die Funktion eines Kondensators. Beide Kompartimente sind dabei als Plattenwärmeübertrager ausgestaltet.

Die Platteninnenräume der Platten des zweiten Kompartiments sind vom dem Kühlmedium vorzugsweise von unten nach oben durchströmbar. Alternativ formuliert weist die Vorrichtung gemäß dieser Ausführungsform Mittel auf welche so konfiguriert sind, dass die Platteninnenräume des zweiten Kompartiments von dem Kühlmedium vorzugsweise von unten nach oben durchströmbar sind.

Gemäß dieser Ausführungsform ist die erste Prozesseinheit, also die als Wärmeübertrager ausgestaltete erste Prozesseinheit, in ein erstes und zweites Kompartiment unterteilt. Das erste Kompartiment dient der Abkühlung des Prozessgasgemischs in den Plattenzwischenräumen dieses ersten Kompartiments und dadurch ebendort dem Kondensieren des kondensierbaren Reaktionsproduktes. Das zweite Kompartiment der ersten Prozesseinheit ist so konfiguriert, dass das aus der zweiten Prozesseinheit ausleitbare Restgas auf der Seite der Plattenzwischenräume des zweiten Kompartiments von unten nach oben geführt werden kann. Das zweite Kompartiment erfüllt die Funktion eines Nachkühlers, ist also das Nachkühler konfiguriert.

Die Plattenzwischenräume der Platten des zweiten Kompartiments sind somit so konfiguriert, dass diese vom Restgas von unten nach oben durchströmbar sind. Insbesondere sind die Plattenzwischenräume der Platten des zweiten Kompartiments so konfiguriert, dass diese vom Restgas in vertikaler Richtung von unten nach oben durchströmbar sind. Dabei kondensiert weiteres flüssiges Reaktionsprodukt aus dem Restgas durch Kühlung mit dem auf der Platteninnenseite geführten Kühlmedium aus. Das Restgas und das Kühlmedium werden dabei vorzugsweise im Gleichstrom geführt. Dadurch erfolgt eine Unterkühlung oder Nachkühlung des mit aus der zweiten Prozesseinheit ausgeleiteten Restgases, welches vor Einleiten in das zweite Kompartiment mit gasförmigem Reaktionsprodukt gesättigt ist. Das dabei auskondensierte Reaktionsprodukt "fällt" aufgrund der vertikalen Anordnung der Wärmeübertragerplatten nach unten und sammelt sich im Sumpf der zweiten Prozesseinheit, dem Abscheider, an. Da das zweite Kompartiment im oberen Bereich der ersten Prozesseinheit aufgrund der im Kopfbereich der ersten Prozesseinheit eintretenden Prozessgase und der Führung des Kühlmediums im zweiten Kompartiment von unten nach oben die höchste Temperatur aufweist, werden gegebenenfalls mitgerissene Flüssigkeitströpfchen des Reaktionsprodukts in diesem oberen Bereich der ersten Prozesseinheit in vorteilhafter Weise verdampft. Dadurch wird vermieden, dass das Restgas das zweite Kompartiment der ersten Prozesseinheit als Zweiphasenströmung (gasförmig/flüssig) verlässt. Dadurch wird das Risiko für Schäden an stromabwärts angeordneten Kompressoren verringert. Weiterhin können in diesem Bereich angeordnete verbindende Rohrleitungen mit kleinerem Durchmesser ausgeführt werden, da für Einphasenströmungen (gasförmig) höhere Geschwindigkeiten in Rohrleitungen zulässig sind.

Die Effizienz der Abscheidung in der zweiten Prozesseinheit wird durch Zusammenwirken mit dem zweiten Kompartiment der ersten Prozesseinheit gemäß dieser Ausführungsform erhöht. Dies ist von besonderem Vorteil, da durch den geringeren Anteil an kondensierbaren Bestandteilen im Restgas etwaig nachgeschaltete Kompressoren geschützt werden (s.o.), oder diese von vorneherein nicht für den Betrieb mit feuchten Gasen ausgelegt werden müssen. Dies spart Investitionskosten (CAPEX) in Bezug auf solche Kompressoren.

Eine Ausführungsform der erfindungsgemäßen Vorrichtung ist in diesem Zusammenhang dadurch gekennzeichnet, dass im Innenraum des Druckmantels eine Trocknungsvorrichtung angeordnet ist, wobei die Trocknungsvorrichtung fluidisch mit den Plattenzwischenräumen des zweiten Kompartiments verbunden ist.

Durch eine mit den Plattenzwischenräumen des zweiten Kompartiments fluidisch verbundene Trocknungsvorrichtung wird die Effizienz der Abscheidung in der zweiten Prozesseinheit weiter verbessert. Bei der Trocknungsvorrichtung handelt es sich insbesondere um einen Tropfenabscheider oder Demister, welcher die Funktion erfüllt kleine Flüssigkeitströpfchen zu größeren Flüssigkeitstropfen zu agglomerieren. Der Tropfenabscheider oder Demister kann somit auch als Agglomerator bezeichnet werden, erfüllt also die Funktion eines Agglomerators.

Die so erzeugbaren größeren Flüssigkeitstropfen fließen anschließend durch die Plattenzwischenräume des zweiten Kompartiments nach unten zur zweiten Prozesseinheit, werden also nach unten zur zweiten Prozesseinheit ausgetragen.

Vorzugsweise stellt die Trocknungsvorrichtung eine große, dabei warme metallische Oberfläche zur Verfügung. Sehr kleine Tropfen, welche nicht agglomeriert werden, werden verdampft und verlassen das zweite Kompartiment der ersten Prozesseinheit in der Gasphase.

In vorteilhafter Weise ist daher die Trocknungsvorrichtung, insbesondere der Tropfenabscheider oder Demister, oberhalb der ersten Prozesseinheit angeordnet, insbesondere oberhalb des zweiten Kompartiments der ersten Prozesseinheit angeordnet. Insbesondere ist die Trocknungsvorrichtung in Flussrichtung des Restgases stromabwärts zum zweiten Kompartiment der ersten Prozesseinheit angeordnet.

Da die Trocknungvorrichtung dem zweiten Kompartiment in Flussrichtung des Restgases stromabwärts zum zweiten Kompartiment angeordnet ist, dient diese auch als zusätzliche Sicherungsvorrichtung, um zu verhindern dass das Restgas als Zweiphasengemisch (gasförmig/flüssig) aus dem zweiten Kompartiment der ersten Prozesseinheit ausgeschleust wird. Flüssigkeit, welche gegebenenfalls nicht im oberen Bereich des zweiten Kompartiments verdampft, wird in der Trocknungsvorrichtung agglomeriert und dadurch in die zweite Prozesseinheit geführt, oder verdampft.

Eine Ausführungsform der erfindungsgemäßen Vorrichtung ist dadurch gekennzeichnet, dass die Vorrichtung einen Prozessgaseintrittstutzen aufweist, wobei der Prozessgaseintrittstutzen fluidisch mit den Plattenzwischenräumen der ersten Prozesseinheit verbunden ist und sich durch den Druckmantel hindurch erstreckt, wobei der Prozessgaseintrittstutzen am Kopf der Vorrichtung angeordnet ist, so dass das Prozessgasgemisch am Kopf der ersten Prozesseinheit in diese eintreten kann.

Ein für die Zuführung des Prozessgasgemischs zur ersten Prozesseinheit erforderlicher Prozessgaseintrittstutzen ist vorzugsweise am Kopf der Vorrichtung angeordnet, insbesondere am Kopf der ersten Prozessgaseinheit angeordnet.

Eine Ausführungsform der erfindungsgemäßen Vorrichtung ist dadurch gekennzeichnet, dass die Vorrichtung einen Kondensataustrittstutzen aufweist, wobei der Kondensataustrittstutzen fluidisch mit der zweiten Prozesseinheit verbunden ist und sich durch den Druckmantel hindurch erstreckt, wobei der Kondensataustrittstutzen am Sumpf der Vorrichtung angeordnet ist, so dass das kondensierte Reaktionsprodukt am Sumpf der zweiten Prozesseinheit aus dieser austreten kann.

Ein für das Ausleiten des abgeschiedenen flüssigen Reaktionsproduktes (Kondensat) aus der zweiten Prozesseinheit erforderlicher Kondensataustrittstutzen ist vorzugsweise am Sumpf der Vorrichtung angeordnet, insbesondere am Sumpf der zweiten Prozesseinheit angeordnet.

Durch die Anordnung eines Prozessgaseintrittstutzen am Kopf und eines Kondensataustrittstutzen am Sumpf der Vorrichtung wird die natürliche Flussrichtung des Prozessgasgemischs und des kondensierbaren Reaktionsprodukt in vertikaler Richtung von oben nach unten zusätzlich unterstützt. Vorzugsweise sind dabei die eintretenden und austretenden Rohrabschnitte der Stutzen zumindest teilweise vertikal angeordnet.

Eine Ausführungsform der erfindungsgemäßen Vorrichtung ist dadurch gekennzeichnet, dass die Vorrichtung einen Kühlmedieneintrittstutzen und einen Kühlmedienaustrittstutzen aufweist, wobei sich der Kühlmedieneintrittstutzen und der Kühlmedienaustrittstutzen durch den Druckmantel hindurch erstrecken, und wobei der Kühlmedieneintrittstutzen und der Kühlmedienaustrittstutzen fluidisch mit den Platteninnenräumen der ersten Prozesseinheit verbunden sind, und wobei der Kühlmedieneintrittstutzen am Sumpf der ersten Prozesseinheit angeordnet ist und der Kühlmedienaustrittsstutzen am Kopf der ersten Prozesseinheit angeordnet ist, so dass das Kühlmedium am Sumpf in die erste Prozesseinheit eintreten kann und das Kühlmedium am Kopf aus der ersten Prozesseinheit austreten kann.

Durch die Anordnung eines Kühlmedieneintrittstutzen am Sumpf und eines Kühlmedienaustrittstutzen am Kopf der ersten Prozesseinheit und bei Durchströmung von unten nach oben kann die erste Prozesseinheit auch bei Ausfall einer Kühlwasser-Umlaufpumpe bei entsprechender Anordnung der Zwangsumlaufpumpe und des Kühlmittelvorlagebehälters Vorzugsweise sind dabei die eintretenden und austretenden Rohrabschnitte der Stutzen seitlich an der Vorrichtung und zumindest teilweise horizontal angeordnet.

Eine Ausführungsform der erfindungsgemäßen Vorrichtung ist dadurch gekennzeichnet, dass im Innenraum des Druckmantels ein mit den Platteninnenräumen fluidisch verbundenes Verteilersystem angeordnet ist, wobei das Verteilersystem zum Verteilen von in die Vorrichtung eintretendem Kühlmedium auf die Platteninnenräume der ersten Prozesseinheit konfiguriert ist.

Das Verteilersystem ist insbesondere fluidisch mit einem Kühlmedieneinstrittstutzen der Vorrichtung verbunden. Über einen Kühlmedieneintrittstutzen in die Vorrichtung eintretendes Kühlmedium wird über das Verteilersystem auf die einzelnen Platten, in diesem Fall Platteninnenräume dieser Platten, verteilt.

Eine Ausführungsform der erfindungsgemäßen Vorrichtung ist dadurch gekennzeichnet, dass im Innenraum des Druckmantels ein mit den Platteninnenräumen fluidisch verbundenes Sammlersystem angeordnet ist, wobei das Sammlersystem zum Sammeln von aus den Platteninnenräumen der ersten Prozesseinheit austretendem Kühlmedium konfiguriert ist.

Das Sammlersystem ist insbesondere fluidisch mit einem Kühlmedienaustrittstutzen der Vorrichtung verbunden. Aus den Platteninnenräumen der einzelnen Platten austretendes Kühlmedium wird über das Sammlersystem gesammelt. Das gesammelte Kühlmedium tritt anschließend über den Kühlmedienaustrittstutzen aus der Vorrichtung aus.

### Ausführungsbeispiel

Die Erfindung wird im Folgenden durch Ausführungsbeispiele näher erläutert. In der folgenden detaillierten Beschreibung wird auf die beigefügten Zeichnungen verwiesen, die einen Teil der Ausführungsbeispiele bilden und in welcher illustrativ spezifische Ausführungsformen der Erfindung dargestellt ist. In diesem Zusammenhang wird richtungsspezifische Terminologie wie "oben", "unten", "vorne", "hinten" usw. in Bezug auf die Ausrichtung der beschriebenen Figur verwendet. Da Komponenten von Ausführungsformen in einer Vielzahl von Ausrichtungen positioniert werden können, dient die richtungsspezifische Terminologie zur Veranschaulichung und ist in keiner Weise limitierend. Der Fachmann ist sich darüber im Klaren, dass andere Ausführungsformen verwendet werden können und strukturelle oder logische Änderungen vorgenommen werden können, ohne vom Schutzumfang der Erfindung abzuweichen. Die folgende detaillierte Beschreibung ist daher nicht in einem einschränkenden Sinne zu verstehen, und der Schutzumfang der Ausführungsformen wird durch die beigefügten Ansprüche definiert. Die Zeichnungen sind, soweit nicht anders angegeben, nicht maßstabsgetreu.

In der folgenden Beschreibung und in den Zeichnungen sind gleiche Elemente mit gleichen Bezugszeichen bezeichnet. Pfeile illustrieren die Strömungsrichtung des Prozessgasgemischs, des kondensierten Reaktionsprodukts, des Restgases und des Kühlmediums.

Es zeigen
- Figur 1: eine stark vereinfachte schematische Darstellung einer Vorrichtung gemäß einem ersten Beispiel der Erfindung, und
- Figur 2: eine stark vereinfachte schematische Darstellung einer Vorrichtung gemäß einem zweiten Beispiel der Erfindung.

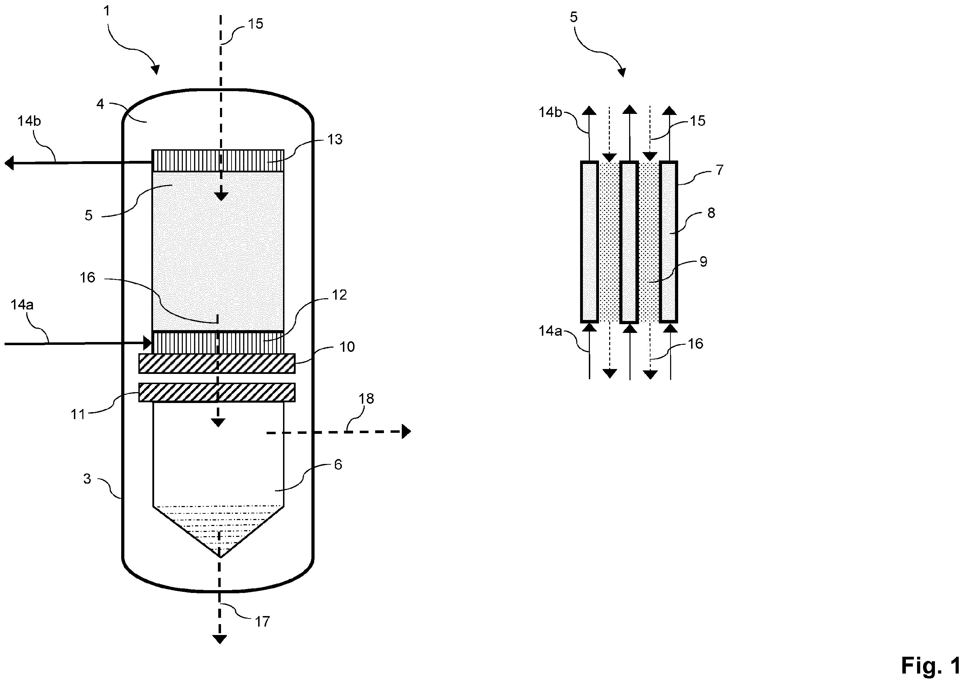

Figur 1 zeigt eine stark vereinfachte schematische Darstellung (Prinzipskizze) einer Vorrichtung 1 gemäß einem ersten Beispiel der Erfindung. Die Vorrichtung 1 ist dabei auf der linken Seite der Figur in einer Frontansicht dargestellt. Figur 1 zeigt weiterhin eine Seitenansicht eines Teils der ersten Prozesseinheit 5 auf der rechten Seite der Figur 1.

Die Vorrichtung 1 gemäß Figur 1 weist einen Druckmantel 3 auf, in dessen Innenraum 4 eine erste Prozesseinheit 5 und eine zweite Prozesseinheit 6 angeordnet sind. Die erste Prozesseinheit 5 ist in einem oberen Teil des Innenraums angeordnet, während die zweite Prozesseinheit 6 in einem unteren Teil des Innenraums 4 und unterhalb der ersten Prozesseinheit 5 angeordnet ist. Beide Prozesseinheiten 5 und 6 sind fluidisch, beispielsweise über entsprechende Rohrleitungen (nicht gezeigt) miteinander verbunden.

Die erste Prozesseinheit 5 erfüllt die Funktion der Kondensation eines kondensierbaren Reaktionsproduktes aus einem Prozessgasgemisch 15, welches von oben über einen Prozessgaseintrittsstutzen (nicht gezeigt) in die erste Prozesseinheit eingeleitet wird. Der Prozessgaseintrittstutzen erstreckt sich durch den Druckmantel 3 hindurch, stellt also eine Verbindung zwischen dem Außenraum der Vorrichtung und der ersten Prozesseinheit 5 her. Bei dem Prozessgasgemisch handelt es sich beispielsweise um ein gasförmiges Gemisch aus einer Methanolsynthese ausgehend von Synthesegas als Eduktgasgemisch. In der ersten Prozessgaseinheit 5 strömt das Prozessgasgemisch von oben nach unten und wird dabei gekühlt, wodurch Reaktionsprodukt, beispielsweise Rohmethanol (Methanol-Wasser-Gemisch), aus dem Prozessgasgemisch auskondensiert.

Die Kühlung des Prozessgasgemischs erfolgt über ein Kühlmedium, welches als Kühlmedium 14a über einen Kühlmedieneintrittstutzen (nicht gezeigt) in die erste Prozesseinheit eingeleitet wird. Der Kühlmedieneintrittstutzen erstreckt sich durch den Druckmantel 3 hindurch, stellt also eine Verbindung zwischen dem Außenraum der Vorrichtung und der ersten Prozesseinheit 5 her. Bei dem Kühlmedium 14a handelt es sich beispielsweise um Kühlwasser. Durch die Kühlung des Prozessgasgemischs 15 wird das Kühlmedium 14a erwärmt und/oder verdampft. Als verbrauchtes Kühlmedium 14b wird es über einen Kühlmedienaustrittstutzen (nicht gezeigt) aus der ersten Prozesseinheit 5 ausgeleitet.

Die erste Prozesseinheit 5 ist als Plattenwärmeübertrager ausgestaltet. Dementsprechend weist die erste Prozesseinheit 5 eine Vielzahl von durchströmbaren (Wärmeübertrager-)Platten 7 auf, deren Anordnung auf der rechten Seite in einer Seitenansicht dargestellt sind. Dabei sind beispielhaft lediglich drei Platten 7 gezeigt, während die erste Prozesseinheit 5 in der Praxis über eine wesentlich größere Anzahl von Platten 7 verfügen würde. Die Gesamtheit der Platten kann auch als Plattenpaket bezeichnet werden. Die Platten 7 sind vertikal (senkrecht) angeordnet und weisen Platteninnenräume 8 auf. Die Platteninnenräume 8 sind von dem Kühlmedium durchströmbar. Das Kühlmedium 14a tritt in einem Sumpfbereich in die erste Prozesseinheit 5 ein, durchströmt die Platten 7 von unten nach oben in vertikaler Richtung durch die Platteninnenräume und tritt anschließend in einem Kopfbereich der ersten Prozesseinheit aus den Platten 7 aus. Die Platten 7 sind in einer besonders vorteilhaften Ausführungsform nicht wie hier dargestellt als gerade Platten ausgestaltet, sondern als Kissenplatten. Entsprechend wäre die erste Prozesseinheit gemäß dieser Ausführungsform als Kissenplattenwärmeübertrager ausgestaltet.

Die durchströmbaren Platten 7 sind vertikal und parallel zueinander beabstandet angeordnet. Dadurch definieren jeweils benachbarte Platten 7 einen Plattenzwischenraum 9, dargestellt durch die gepunktete Fläche. Ein Plattenzwischenraum kann sich auch durch den frei durchströmbaren Raum zwischen einer Platte 7 und einer Wandung (nicht gezeigt) der ersten Prozesseinheit 5 definieren. In jedem Fall ist die erste Prozesseinheit 5 so konfiguriert und weist Mittel auf, dass die Plattenzwischenräume 9 vom Prozessgasgemisch 15 von oben nach unten durchströmbar sind. Dabei kondensiert ein flüssiges Reaktionsprodukt aus dem Prozessgasgemisch 15 durch indirekte Kühlung durch das im Gegenstrom in den Platteninnenräumen geführte Kühlmedium 14a aus. Dadurch resultiert ein Gemisch 16 aus Kondensat (flüssigem Reaktionsprodukt) und nicht kondensiertem Restgas, welches auf der Seite der Plattenzwischenräume im Sumpfbereich der ersten Prozesseinheit 5 aus dieser ausgetragen wird. Dieses Gemisch wird über eine fluidische Verbindung, wie eine Rohrleitung oder ein komplexeres System aus mehrere Rohrleitungen, und gegebenenfalls Sammlern und Verteilern (nicht gezeigt), in die zweite Prozesseinheit 6 überführt.

Das über den Kühlmedieneintrittstutzen (nicht gezeigt) herangeführte Kühlmedium 14a wird über ein Verteilersystem 12 (längs schraffierte Fläche) auf die einzelnen Platten 7 respektive Platteninnenräume 8 verteilt. Das verbrauchte Kühlmedium 14b, beispielsweise erwärmtes Kühlwasser, wird über ein Sammlersystem 13 aus den Platteninnenräumen 8 zusammengeführt und über den Kühlmedienaustrittstutzen (nicht gezeigt) aus der Vorrichtung abgezogen.

Die erste Prozesseinheit 5 ist mit Hilfe einer Stützstruktur mit dem Druckmantel 3 der Vorrichtung 1 verbunden. Die Stützstruktur ist unterhalb der ersten Prozesseinheit 5 angeordnet und somit als Abstützung 10 ausgestaltet. Dabei ist die Abstützung 10 mechanisch sowohl mit einem unteren Bereich oder Sumpfbereich der ersten Prozesseinheit 5 als auch einer Innenseite des Druckmantels 3 mechanisch verbunden (nicht gezeigt). Bei der Art der mechanischen Verbindung kann es sich um jede geeignete Art einer mechanischen Verbindung handeln, beispielsweise um eine Schweißverbindung. Durch die Anordnung der Stützstruktur als Abstützung 10 unterhalb der ersten Prozesseinheit 5 kann sich diese bei Erwärmung im Betrieb entsprechend frei nach oben innerhalb des Innenraums 4 ausdehnen.

Unterhalb der ersten Prozesseinheit 5 im Innenraum 4 ist die zweite Prozesseinheit 6 angeordnet. Die zweite Prozesseinheit 6 ist als Gas-Flüssigkeits-Abscheider ausgestaltet. Entsprechend wird das in die zweite Prozesseinheit 6 eingeleitete Gemisch aus Kondensat (flüssigem Reaktionsprodukt) und Restgas in dieser in eine flüssige und gasförmig Phase getrennt. Mit anderen Worten, die flüssige Phase wird aus dem zweiphasigen Gemisch abgeschieden. Gemäß dem gezeigten Beispiel ist der Gas-Flüssigkeits-Abscheider als zylindrischer Behälter mit konisch zulaufendem Boden ausgestaltet. Das Restgas enthält beispielsweise, für den Fall einer Methanolsynthese, nicht umgesetztes Synthesegas, inerte nicht kondensierbare Bestandteile, nicht abgeschiedenes Rohmethanol und nicht kondensierbare Nebenprodukte. Das Restgas wird über einen Restgasaustrittstutzen (nicht gezeigt) aus der zweiten Prozesseinheit abgezogen. Der Restgasaustrittstutzen erstreckt sich durch den Druckmantel 3 der Vorrichtung 1 hindurch.

Im Sumpf der zweiten Prozesseinheit 6 fällt abgeschiedenes Kondensat (flüssiges Reaktionsprodukt) 17 an. Dieses wird über einen Kondensataustrittstutzen (nicht gezeigt) aus der zweiten Prozesseinheit 6 abgezogen und einer weiteren Verarbeitung zugeführt. Der Kondensataustrittstutzen erstreckt sich durch den Mantel 3 der Vorrichtung hindurch und stellt im Wesentlichen eine Verbindung zwischen einem Auslass der zweiten Prozesseinheit 6 und der äußeren Umgebung der Vorrichtung 1 dar.

Die zweite Prozesseinheit 6 ist mit Hilfe einer Stützstruktur mit dem Druckmantel 3 der Vorrichtung 1 verbunden. Die Stützstruktur ist oberhalb der zweiten Prozesseinheit 6 angeordnet und somit als Aufhängung 11 ausgestaltet. Dabei ist die Aufhängung 11 mechanisch sowohl mit einem oberen Bereich oder Kopfbereich der zweiten Prozesseinheit 6 als auch einer Innenseite des Druckmantels 3 mechanisch verbunden. Bei der Art der mechanischen Verbindung kann es sich um jede geeignete Art einer mechanischen Verbindung handeln, beispielsweise um eine Schweißverbindung. Durch die Anordnung der Stützstruktur als Aufhängung 11 oberhalb der zweiten Prozesseinheit 6 kann sich diese bei Erwärmung im Betrieb entsprechend frei nach unten innerhalb des Innenraums 4 ausdehnen.

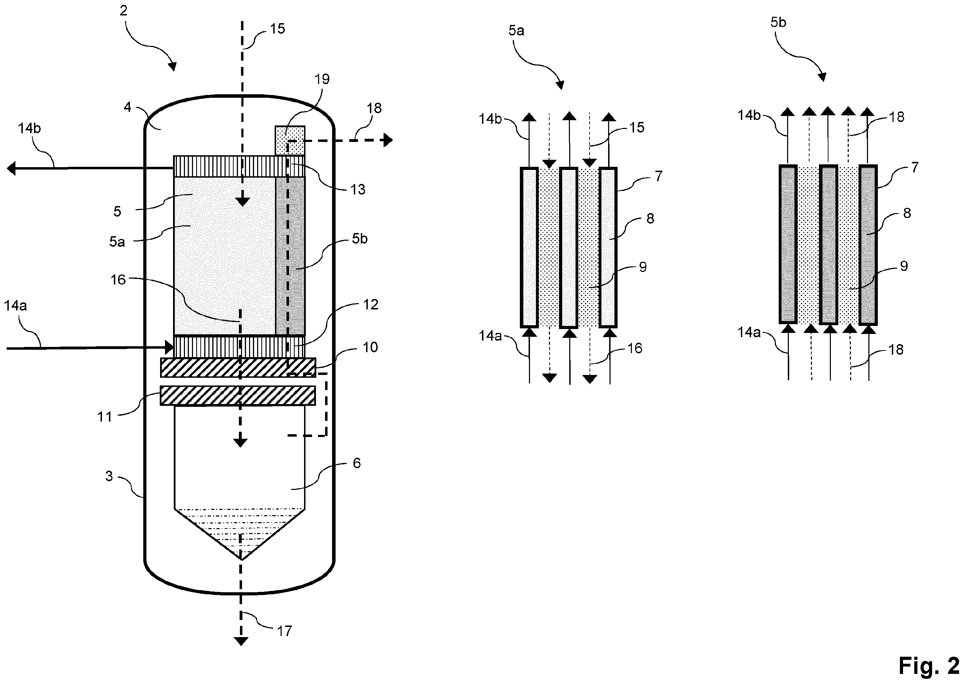

Figur 2 zeigt eine stark vereinfachte schematische Darstellung (Prinzipskizze) einer Vorrichtung 2 gemäß einem zweiten Beispiel der Erfindung. Die Vorrichtung 2 ist dabei auf der linken Seite der Figur in einer Frontansicht dargestellt. Figur 2 zeigt weiterhin eine Seitenansicht eines Teils des ersten Kompartiments 5a der ersten Prozesseinheit 5 in der Mitte der Figur 2. Figur 2 zeigt weiterhin eine Seitenansicht eines Teils des zweiten Kompartiments 5b der ersten Prozesseinheit 5 auf der rechten Seite der Figur 2.

Bereits in Figur 1 gezeigte Elemente mit gleichen Bezugsziffern wie Elemente der Figur 2 erfüllen in Bezug auf das Beispiel der Figur 2 die gleiche Funktion wie im Beispiel der Figur 1 und werden daher nicht nochmals im Detail erläutert.

Die Vorrichtung 2 gemäß Beispiel wie in Figur 2 gezeigt weist eine erste Prozesseinheit 5 mit zwei unterschiedlichen Kompartimenten 5a und 5b auf. Weiterhin weist die Vorrichtung 2 einen Tropfenabscheider (Demister) 19 als Trocknungsvorrichtung auf.

Die Kompartimente 5a und 5b der ersten Prozesseinheit unterscheiden sich nicht grundsätzlich in ihren strukturellen Merkmalen. Beide Kompartimente weisen vertikal und parallel zueinander angeordnete (Wärmeübertrager)-Platten 7 auf. Diese werden auf ihrer Platteninnenseite 8 in vertikaler Richtung von unten nach oben von einem Kühlmedium 14a durchströmt. Im Gegensatz zum ersten Kompartiment 5a werden die Plattenzwischenräume 9 des zweiten Kompartiments 5b jedoch nicht von einem Prozessgasgemisch 15 und auch nicht in vertikaler Richtung von oben nach unten durchströmt. Vielmehr werden die Plattenzwischenräume 9 des zweiten Kompartiments 5b von aus der zweiten Prozesseinheit 6 ausgeleitetem Restgas 18 in vertikaler Richtung von unten nach oben durchströmt. Dabei erfolgt eine Nachkühlung des Restgases 18 durch Kühlung mit dem Kühlmedium 14a auf den Platteninnenseiten 8 des Kompartiments 5b. Durch diese Nachkühlung kondensiert weiteres Kondensat (flüssiges Reaktionsprodukt) aus dem vorher gesättigten Restgas 18 aus. Das gebildete Kondensat fließt auf der Plattenzwischenraumseite des Kompartiments 5b nach unten und gelangt über eine entsprechende fluidische Verbindung (nicht gezeigt) in die als Gas-Flüssigkeits-Abscheider ausgestaltete zweite Prozesseinheit 6, und wird dort mit ansonsten anfallendem Kondensat 17 im Sumpf der zweiten Prozesseinheit 6 abgeschieden. Die Effizienz der Abscheidung wird dadurch gegenüber der Vorrichtung 1 verbessert, da nicht mit gasförmigem Reaktionsprodukt gesättigtes Restgas aus der Vorrichtung abgezogen wird.

Im zweiten Kompartiment 5b werden das Restgas 18 und das Kühlmedium 14a, 14b im Gleichstrom geführt.

Die Effizienz der Abscheidung wird gemäß Vorrichtung 2 weiter durch die Anordnung einer Trocknungsvorrichtung, hier eines Tropfenabscheiders (Demisters) 19, oberhalb des zweiten Kompartiments 5b verbessert. Der Tropfenabscheider 19 ist fluidisch mit dem zweiten Kompartiment 5b der ersten Prozesseinheit 5 verbunden. Kleinere Tröpfchen von kondensiertem Reaktionsprodukt werden dort zu größeren Tropfen agglomeriert. Dadurch steigt das "Gewicht" dieser Tropfen, welche dann auch über die Plattenzwischenräume 9 des zweiten Kompartiments schwerkraftgetrieben nach unten fließen und in die zweite Prozesseinheit 6 gelangen. Nicht zu Tropfen agglomerierbare Flüssigkeitströpfchen werden im oberen Bereich des zweiten Kompartiments 5b und/oder im Tropfenabscheider 19 verdampft. Dadurch wird sichergestellt, dass ein rein gasförmiges Restgas 18 aus der Vorrichtung 2 ausgeleitet wird.

### Bezugszeichenliste

- 1, 2: Vorrichtung
- 3: Druckmantel
- 4: Innenraum
- 5: erste Prozesseinheit
- 5a: erstes Kompartiment (der ersten Prozesseinheit)
- 5b: zweites Kompartiment (der ersten Prozesseinheit)
- 6: zweite Prozesseinheit
- 7: (Wärmeübertrager-)Platte
- 8: Platteninnenraum
- 9: Plattenzwischenraum
- 10: Abstützung (Stützstruktur)
- 11: Aufhängung (Stützstruktur)
- 12: Verteilersystem
- 13: Sammlersystem
- 14a, 14b: Kühlmedium
- 15: Prozessgasgemisch
- 16: Reaktionsprodukt (Kondensat) und Restgas
- 17: Reaktionsprodukt (Kondensat)
- 18: Restgas
- 19: Tropfenabscheider (Trocknungsvorrichtung)

## Patentansprüche

1. Vorrichtung (1, 2) zum Abtrennen eines kondensierbaren Reaktionsprodukts (17) aus einem Prozessgasgemisch (15), aufweisend
- einen Druckmantel (3) mit einem Innenraum (4), wobei in dem Innenraum (4) zumindest zwei fluidisch miteinander verbundene Prozesseinheiten (5, 6) übereinander angeordnet sind;
- eine erste Prozesseinheit (5), wobei die erste Prozesseinheit (5) zum Kondensieren des Reaktionsprodukts (17) aus dem Prozessgasgemisch (15) konfiguriert ist, und
die erste Prozesseinheit (5) als Plattenwärmeübertrager ausgestaltet ist, und die erste Prozesseinheit (5) dabei eine Vielzahl von vertikal und parallel zueinander angeordneten Platten (7) mit durchströmbaren Platteninnenräumen (8) aufweist, und zwischen benachbarten Platten (7) Plattenzwischenräume (9) ausgebildet sind, wobei die Plattenzwischenräume (9) mit dem Prozessgasgemisch (15) von oben nach unten durchströmbar sind, und die Platteninnenräume (8) von einem Kühlmedium (14a, 14b) durchströmbar sind, vorzugsweise von unten nach oben durchströmbar sind;
- eine unterhalb der ersten Prozesseinheit (5) angeordnete zweite Prozesseinheit (6), wobei die zweite Prozesseinheit (6) fluidisch mit den Plattenzwischenräumen (9) der ersten Prozesseinheit (5) verbunden ist, und wobei die zweite Prozesseinheit (6) als Gas-Flüssigkeits-Abscheider ausgestaltet ist und zum Abscheiden des in der ersten Prozesseinheit (5) erhältlichen kondensierten Reaktionsprodukts (17) von einem Restgas (18) konfiguriert ist.

2. Vorrichtung (1, 2) nach Anspruch 1, **dadurch gekennzeichnet, dass** die Vorrichtung eine Stützstruktur (10, 11) aufweist, wobei die Stützstruktur (10, 11) als zumindest teilweise unterhalb einer Prozesseinheit angeordnete Abstützung oder als zumindest teilweise oberhalb einer Prozesseinheit angeordnete Aufhängung ausgestaltet ist und dabei eine mechanische Verbindung zwischen einer Prozesseinheit (5, 6) und dem Druckmantel (3) ausbildet, oder die Stützstruktur (10, 11) als zumindest teilweise zwischen der ersten und zweiten Prozesseinheit angeordnetes Verbindungselement ausgestaltet ist und dabei eine mechanische Verbindung zwischen beiden Prozesseinheiten und dem Druckmantel (3) ausbildet.

3. Vorrichtung (1, 2) nach Anspruch 1, **dadurch gekennzeichnet, dass** die Vorrichtung eine Stützstruktur (10, 11) aufweist, wobei die Stützstruktur (10, 11) als zumindest teilweise unterhalb der zweiten Prozesseinheit angeordnete Abstützung oder als zumindest teilweise oberhalb der ersten Prozesseinheit angeordnete Aufhängung ausgestaltet ist und dabei eine mechanische Verbindung zwischen der jeweiligen Prozesseinheit und dem Druckmantel ausbildet, und die Vorrichtung ein zumindest teilweise zwischen der ersten und zweiten Prozesseinheit angeordnetes Verbindungselement aufweist, wobei das Verbindungselement eine mechanische Verbindung zwischen der ersten Prozesseinheit und der zweiten Prozesseinheit ausbildet.

4. Vorrichtung (1, 2) nach einem der vorgenannten Ansprüche, **dadurch gekennzeichnet, dass** die Platten der ersten Prozesseinheit als Kissenplatten ausgestaltet sind.

5. Vorrichtung (1, 2) nach einem der vorgenannten Ansprüche, **dadurch gekennzeichnet, dass** die erste Prozesseinheit (5) ein erstes (5a) und ein zweites Kompartiment (5b) aufweist, wobei genannte Kompartimente (5a, 5b) so konfiguriert sind, dass
Plattenzwischenräume (9) des ersten Kompartiments (5a) von dem Prozessgasgemisch (15) von oben nach unten durchströmbar sind, und Plattenzwischenräume (9) des zweiten Kompartiments (5b) von einem aus der zweiten Prozesseinheit (6) ausleitbaren Restgas (18) von unten nach oben durchströmbar sind, wodurch in den Plattenzwischenräumen (9) des zweiten Kompartiments (5b) weiteres Reaktionsprodukt (17) aus dem Restgas (18) kondensierbar ist.

6. Vorrichtung (1, 2) nach Anspruch 5, **dadurch gekennzeichnet, dass** im Innenraum (4) des Druckmantels (3) eine Trocknungsvorrichtung (19) angeordnet ist, wobei die Trocknungsvorrichtung (19) fluidisch mit den Plattenzwischenräumen (9) des zweiten Kompartiments (5b) verbunden ist.

7. Vorrichtung (1, 2) nach Anspruch 6, **dadurch gekennzeichnet, dass** die Trocknungsvorrichtung (19) oberhalb der ersten Prozesseinheit (5) angeordnet ist, insbesondere oberhalb des zweiten Kompartiments (5b) der ersten Prozesseinheit (5) angeordnet ist.

8. Vorrichtung (1, 2) nach einem der vorgenannten Ansprüche, **dadurch gekennzeichnet, dass** die Vorrichtung einen Prozessgaseintrittstutzen aufweist, wobei der Prozessgaseintrittstutzen fluidisch mit den Plattenzwischenräumen (9) der ersten Prozesseinheit (5) verbunden ist und sich durch den Druckmantel (3) hindurch erstreckt, wobei der Prozessgaseintrittstutzen am Kopf der Vorrichtung (1, 2) angeordnet ist, so dass das Prozessgasgemisch (15) am Kopf der ersten Prozesseinheit in diese eintreten kann.

9. Vorrichtung (1, 2) nach einem der vorgenannten Ansprüche, **dadurch gekennzeichnet, dass** die Vorrichtung (1, 2) einen Kondensataustrittstutzen aufweist, wobei der Kondensataustrittstutzen fluidisch mit der zweiten Prozesseinheit (6) verbunden ist und sich durch den Druckmantel (3) hindurch erstreckt, wobei der Kondensataustrittstutzen am Sumpf der Vorrichtung (1, 2) angeordnet ist, so dass das kondensierte Reaktionsprodukt (17) am Sumpf der zweiten Prozesseinheit (6) aus dieser austreten kann.

10. Vorrichtung (1, 2) nach einem der vorgenannten Ansprüche, **dadurch gekennzeichnet, dass** die Vorrichtung (1, 2) einen Kühlmedieneintrittstutzen und einen Kühlmedienaustrittstutzen aufweist, wobei sich der Kühlmedieneintrittstutzen und der Kühlmedienaustrittstutzen durch den Druckmantel (3) hindurch erstrecken, und wobei der Kühlmedieneintrittstutzen und der Kühlmedienaustrittsstutzten fluidisch mit den Platteninnenräumen (8) der ersten Prozesseinheit (5) verbunden sind, und wobei der Kühlmedieneintrittstutzen am Sumpf der ersten Prozesseinheit (5) angeordnet ist und der Kühlmedienaustrittsstutzen am Kopf der ersten Prozesseinheit (5) angeordnet ist, so dass das Kühlmedium am Sumpf in die erste Prozesseinheit (5) eintreten kann und das Kühlmedium am Kopf aus der ersten Prozesseinheit (5) austreten kann.

11. Vorrichtung (1, 2) nach einem der vorgenannten Ansprüche, **dadurch gekennzeichnet, dass** im Innenraum (4) des Druckmantels (3) ein mit den Platteninnenräumen (8) fluidisch verbundenes Verteilersystem angeordnet ist, wobei das Verteilersystem zum Verteilen von in die Vorrichtung (1, 2) eintretendem Kühlmedium (14a) auf die Platteninnenräume (8) der ersten Prozesseinheit (5) konfiguriert ist.

12. Vorrichtung (1, 2) nach einem der vorgenannten Ansprüche, **dadurch gekennzeichnet, dass** im Innenraum (4) des Druckmantels (3) ein mit den Platteninnenräumen (8) fluidisch verbundenes Sammlersystem angeordnet ist, wobei das Sammlersystem zum Sammeln von aus den Platteninnenräumen (8) der ersten Prozesseinheit (5) austretendem Kühlmedium (14b) konfiguriert ist.
